# EUROPEAN PATENT APPLICATION

(11) **EP 4 258 458 A1**
(43) Date of publication of application: **11.10.2023**
(21) Application number: 22884098.9
(22) Date of filing: 21.10.2022
(51) Int. Cl.: H01M 50/574, H01M 50/342, H01M 50/152

(54) **CAP ASSEMBLY AND SECONDARY BATTERY COMPRISING SAME**

(30) Priority: 22.10.2021 KR 20210141748
(71) Applicant: LG Energy Solution, Ltd., Seoul 07335 (KR)
(72) Inventor: KIM, Taejin, Daejeon 34122 (KR); PARK, Jisung, Daejeon 34122 (KR); YOON, Ujin, Daejeon 34122 (KR); KIM, Yunok, Daejeon 34122 (KR); SONG, Han Gab, Daejeon 34122 (KR)
(74) Representative: Goddar, Heinz J.
(86) International application number: PCT/KR2022/016172
(87) International publication number: WO 2023/068876

(57) **Abstract**

The present invention relates to a cap assembly having one side open and coupled to an upper portion of a can accommodating a battery assembly therein, the cap assembly including: a top cap coupled to the upper portion of the can; a safety vent positioned under the top cap and coupled to a distal end of the top cap; and a current interrupt device located under the safety vent and having at least a portion that is in contact with the safety vent, in which the current interrupt device includes a material having lower hardness than hardness of the safety vent.

## Description

### [Technical Field]

This application claims priority to and the benefit of Korean Patent Application No. 10-2021-0141748 filed in the Korean Intellectual Property Office on October 22, 2021, the entire contents of which are incorporated herein by reference.

The present invention relates to a cap assembly and a secondary battery including the same. Specifically, the present invention relates to a cylindrical secondary battery capable of effectively absorbing external pressure due to a difference in physical properties between a safety vent and a current interrupt device.

### [Background Art]

According to a shape of a battery case, a secondary battery is classified into a cylindrical battery or a prismatic battery in which the battery assembly is embedded in a cylindrical or prismatic metal can, and a pouch-type battery in which the battery assembly is embedded in a pouch-type case of an aluminum laminate sheet.

Among them, the cylindrical secondary battery generally has a structure in which a top cap is coupled to an upper portion of a battery can, and a safety vent is provided in a lower portion of the top cap. In addition, there are cases in which the temperature of the secondary battery rises or the internal pressure rises due to the abnormal behavior of the secondary battery, and in order to prevent the risk of fire or explosion that may occur in this case, according to the prior art, safety devices are provided in the secondary battery.

A cylindrical secondary battery is provided with a safety vent and a Current Interrupt Device (CID) as safety devises.

In the stability test of the cylindrical secondary battery, the cylindrical secondary battery is placed between pressure plates and then the cylindrical secondary battery is physically deformed by applying pressure. Since the stability test changes the overall shape of the cylindrical secondary battery, severe deformation of the cap assembly is also induced.

In this case, since the safety vent and the current interrupt device are made of a material with high hardness, there is a problem that the safety vent and the current interrupt device penetrate the gasket without being deformed by external pressure and are in contact with the upper end of the can, thereby causing a short circuit.

Accordingly, there is a need for a secondary battery structure capable of fundamentally solving these problems and remarkably improving the problem of defective rates, such as ignition or thermal runaway, of the cylindrical secondary battery.

### [Detailed Description of the Invention]

### [Technical Problem]

The present invention is to solve the problems of the prior art, and to provide a cap assembly in which a safety vent and a current interrupt device are made of materials having different physical properties, and a secondary battery including the same.

### [Technical Solution]

An exemplary embodiment of the present invention provides a cap assembly having one side open and coupled to an upper portion of a can accommodating a battery assembly therein, the cap assembly including: a top cap coupled to the upper portion of the can; a safety vent positioned under the top cap and coupled to a distal end of the top cap; and a current interrupt device located under the safety vent and having at least a portion that is in contact with the safety vent, in which the current interrupt device includes a material having lower hardness than hardness of the safety vent.

In the exemplary embodiment of the present invention, the safety vent includes aluminum or an aluminum alloy.

In the exemplary embodiment of the present invention, the safety vent is provided at an angle of 0° to 30° with the current interrupt device.

### [Advantageous Effects]

The cap assembly and the secondary battery including the same according to the exemplary embodiment of the present invention include the safety vent and the current interrupt device having different physical properties to effectively absorb external pressure, thereby preventing the shape from being deformed by external pressure.

### [Brief Description of Drawings]

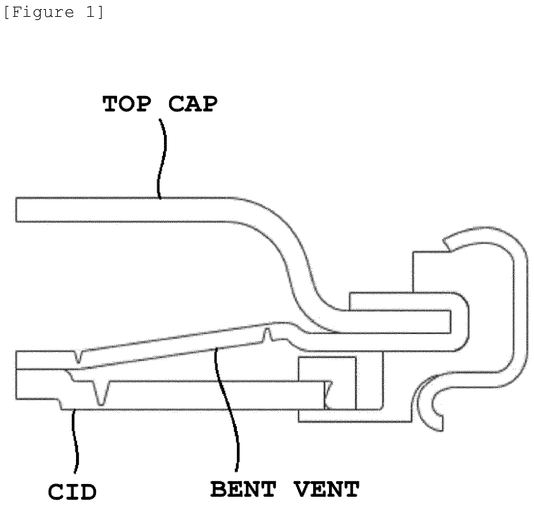

FIG. 1 is a cross-sectional view illustrating a cap assembly in the related art.
FIG. 2 is a cross-sectional view illustrating a cylindrical secondary battery according to an exemplary embodiment of the present invention.
FIG. 3 is a cross-sectional view illustrating a cap assembly according to the exemplary embodiment of the present invention.

### <Explanation of Reference Numerals and Symbols>

- 100:: Cylindrical secondary battery
- 10:: Battery assembly
- 20:: Can
- 21:: Beading portion
- 22:: Crimping portion
- 30:: Cap assembly
- 31:: Top cap
- 32:: Safety vent
- 32a:: Recessed central portion
- 32b:: Venting portion
- 32c:: Edge portion
- 32d:: Notch
- 33:: Current interrupt device
- 33a:: Central portion
- 33b:: CID filter part
- 40:: Gasket
- 50:: CID gasket

### [Best Mode]

Hereinafter, the present invention will be described in detail with reference to the drawings. However, the drawings are for illustrating the present invention, and the scope of the present invention is not limited by the drawings.

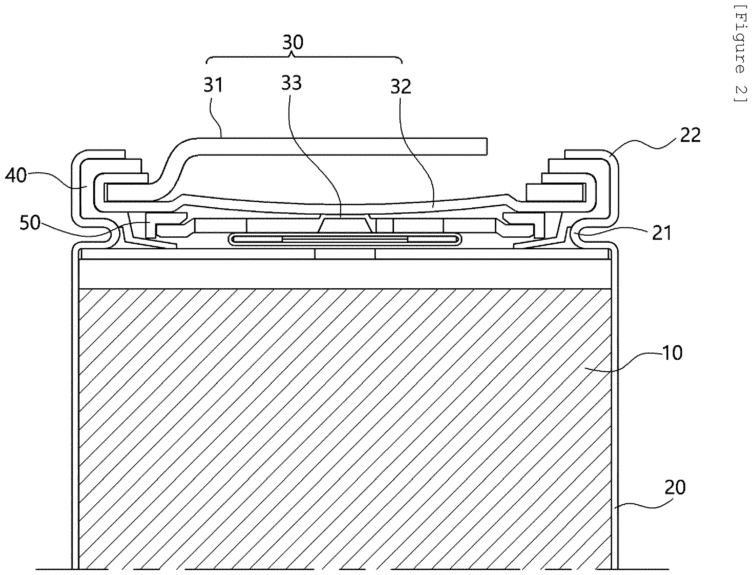

FIG. 2 is a cross-sectional view illustrating a cylindrical secondary battery 100 according to an exemplary embodiment of the present invention. The cylindrical secondary battery 100 according to the exemplary embodiment of the present invention may include a battery assembly 10, a can 20, and a cap assembly 30.

The battery assembly 10 is a power generating device capable of charging and discharging having a stacked structure of a positive electrode/a separation membrane/a negative electrode, and may include a jelly-roll-type structure in which a separation membrane is interposed between a positive electrode and a negative electrode of a long sheet-shape coated with an active material and wounded.

In the cylindrical secondary battery 100 according to the present invention, a first insulating plate (not illustrated) and a second insulating plate (not illustrated) may be positioned above and below the battery assembly 10, respectively. The first insulating plate may insulate a space between the battery assembly 10 and the cap assembly 30, and the second insulating plate may insulate a space between the battery assembly 10 and the lower portion of the can 20.

Further, the battery assembly 10 may further include a center pin (not illustrated) in the center. The center pin may prevent the battery assembly 10 wound in a jelly-roll form from being unwound and serve as a movement passage for gas inside the cylindrical secondary battery 100.

The can 20 may be provided in a cylindrical structure in which a space is formed. The can 20 may accommodate the battery assembly 10 including the electrode and the separation membrane and an electrolyte (not illustrated) in an internal space. One side of the can 20 may have an open structure, and the other side may have a sealed structure. Here, the one side and the other side of the can 20 mean the ends located at the upper and lower sides along the direction of gravity or the central axis of the can 20.

A beading portion 21 folded in the center direction of the cylindrical secondary battery 100 may be provided on one side of the opened can 20. In addition, the can 20 may be provided with a crimping portion 22 on the upper side of the beading portion 21. That is, the crimping portion 22 may be located at the uppermost side of the can 20.

The can 20 may be made of a lightweight conductive metal material, such as aluminum or an aluminum alloy.

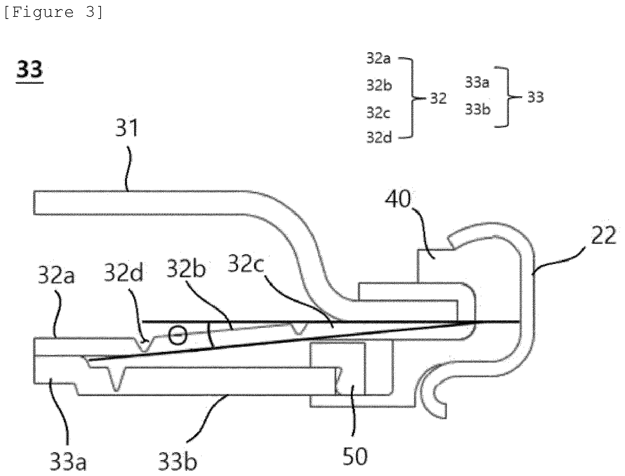

FIG. 3 is a cross-sectional view illustrating the cap assembly 30 according to the exemplary embodiment of the present invention. The cap assembly 30 may be coupled to the upper portion of the can 20, and may include a top cap 31, a safety vent 32, and a current interrupt device 33.

The top cap 31 may protrude at the topmost portion of the cap assembly 30 and serve as an electrode terminal to be electrically connected to the outside. The top cap 31 may be coupled to the upper portion of the can 20. That is, the top cap 31 may be coupled to the crimping portion 22 located at the uppermost portion of the can 20.

The cylindrical secondary battery 100 according to the present invention may include a gasket 40 between the crimping portion 22 and the top cap 31. The gasket 40 may increase the sealing force of the can 20.

The safety vent 32 may be positioned below the top cap 31 and may be coupled to a distal end of the top cap 31. The safety vent 32 may be in contact with the distal end of the top cap 31 by a predetermined length, and portions of the safety vent 32 other than the contact length may be positioned to be spaced apart from the top cap 31 by a predetermined distance. In more detail, the separation distance between the safety vent 32 and the top cap 31 may increase from the distal end contacting the top cap 31 toward the center. Here, the distal end may mean a position corresponding to the position of the crimping portion 22 or the gasket 40.

In the exemplary embodiment, the safety vent 32 may be provided with a distal end perpendicular to the axial direction of the can 20. In this case, the top cap 31 may be provided perpendicular to the axial direction of the can 20 in the same manner as the safety vent 32. That is, the safety vent 32 and the top cap 31 may be positioned horizontally.

In another exemplary embodiment, the safety vent 32 may be provided in a form in which the distal end is bent to surround the outer circumferential surface of the top cap 32.

The safety vent 32 may be bent at least once or more. The safety vent 32 may include a recessed central portion 32a in which a center of the safety vent 32 is recessed, an edge portion 32c coupled to the distal end of the top cap 31, that is, a region in which the top cap 31 is coupled to the can 20, and a venting portion 32b connecting the recessed central portion 32a and the edge portion 32c. Further, the safety vent 32 may include one or more notches 32d between the recessed central portion 32a and the edge portion 32c.

For example, the safety vent 32 may be provided with two notches 32d at a portion that is not in contact with the top cap 31. That is, the safety vent 32 may be bent by the notch 32d, and the center of the safety vent 32 may be depressed to form the recessed central portion 32a. In addition, the safety vent 32 may include the venting portion 32b connecting the edge portion 32c contacting the top cap 31 and the recessed central portion 32a. In other words, the notch 32d may be provided in a region in which the vented portion 32b and the recessed central portion 32a are in contact and in a region in which the vented portion 32b and the edge portion 32c are in contact.

The venting portion 32b of the safety vent 32 may be inclined, and a lower surface of the venting portion 32b may have an inclination of an angle (θ) of 0° to 30° with an upper surface or a lower surface of the edge portion 32c of the safety vent 32. In other words, since the edge portion 32c of the safety vent 32 may be positioned parallel to a CID filter 33b to be described later, the lower surface of the venting portion 32b may be provided at an angle of 0° to 30° with the upper surface of the CID filter 33b.

When the venting portion 32b has an inclination exceeding 30° with the CID filter 33b, during the stability test of the cylindrical secondary battery 100, the recessed central portion 32a of the safety vent 32 is deformed in the direction of the top cap 31, so that a short circuit and a shape change of the cap assembly 30 may occur.

The current interrupt device 33 may be positioned below the safety vent 32, and may have at least a portion that is in contact with the safety vent 32.

The current interrupt device 33 may include the central portion 33a protruding in the direction of the safety vent 32 and the CID filter portion 33b positioned outside the central portion. Accordingly, the current interrupt device 33 of the cap assembly 30 may contact the central portion 33a and the recessed central portion 32a of the safety vent 32.

In the cap assembly 30 according to the present invention, a CID gasket 50 may be provided at the distal end of the CID filter part 33b. The CID gasket 50 may prevent the safety vent 32 from being in contact with a portion other than the central portion 33a of the current interrupt device 33.

In the cap assembly 30 according to the present invention, the current interrupt device 33 may include a material having lower hardness than that of the safety vent 32. When the current interrupt device 33 has high hardness, there is a problem in that the deformation of the shape of the current interrupt device 33 is minimized by the stability test or external pressure, so that the current interrupt device 33 penetrates the CID gasket 50 and comes into contact with the beading portion 21 to increase the possibility of ignition.

The safety vent 32 may include a material having high hardness in order to reduce the shape deformation rate due to external pressure. That is, the safety vent 32 has a low shape deformation rate even under external pressure, so that the total deformation rate of the top cap 31 may be reduced.

Further, since the safety vent 32 according to the present invention is formed in the recessed shape in the center, when external pressure is applied to the cylindrical secondary battery 100, the recessed central portion of the safety vent 32 may be deformed in the direction of the current interrupt device 33.

In this case, the safety vent 32 applies pressure to the current interrupt device 33 by shape deformation, and the current interrupt device 33 is provided with a soft material to receive a large pressure applied by the safety vent 32, and thus, the current interrupt device 33 may have an increased shape deformation rate.

The safety vent 32 may include aluminum or an aluminum alloy. In the exemplary embodiment, when the safety vent 32 is an aluminum alloy, the safety vent 32 may be an alloy of aluminum and manganese. For example, the safety vent 32 may include 85% by weight to 98% by weight of aluminum, 7% by weight or less of manganese, 5% by weight or less of iron, and 5% by weight or less of silicon.

When the content of aluminum in the aluminum alloy exceeds 98% by weight, the ductility increases and the shape of the cap assembly 30 is deformed by external pressure, so that there may occur a problem in the ignition or thermal runaway of the cylindrical secondary battery 100.

When the content of manganese in the aluminum alloy exceeds 7% by weight, castability may deteriorate, and workability may be reduced due to adhesion. When the content of iron exceeds 5% by weight, not only is the ductility lowered, but the extrudability and productivity may be lowered, and the material may be corroded, and precipitates may be formed by combining with aluminum and silicon, and the corrosion resistance may be lowered. When the content of silicone exceeds 5% by weight by weight, the moldability may deteriorate as well as the surface quality of the molded article.

The safety vent 32 may have hardness of 15 Kgf/mm² to 35 Kgf/mm², preferably, hardness of 20 Kgf/mm² to 30 Kgf/mm².

The safety vent 32 may have yield strength of 1 Kgf/mm² to 5 Kgf/mm², preferably, yield strength of 2 Kgf/mm² to 4 Kgf/mm².

The safety vent 32 may have an elongation rate of 35% to 45%, preferably 35% to 40%.

The current interrupt device 33 may include an aluminum material. More specifically, the current interrupt device 33 may include an aluminum material having a purity of 90% or more. When the purity of the aluminum of the current interrupt device 33 is less than 90%, the hardness of the current interrupt device 33 may increase to increase the shape deformation rate by external pressure. The current interrupt device 33 may have hardness of 10 Kgf/mm² to 30 Kgf/mm², preferably a hardness of 15 Kgf/mm² to 25 Kgf/mm².

The current interrupt device 33 may have yield strength of 2 Kgf/mm² to 6 Kgf/mm², and preferably, hardness of 3 Kgf/mm² to 4 Kgf/mm².

The current interrupt device 33 may have an elongation rate of 25% to 35%, preferably 25% to 30%.

The yield strength and the elongation rate of the safety vent and the current interrupt device were measured for safety vent and current interrupt device specimens by using a tensile tester based on KS B 0802 (standard tensile test method for metal materials), and Brinell hardness was measured for a safety vent and current-blocking device specimens by using a hardness tester in accordance with KS B 0805.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A cap assembly having one side open and coupled to an upper portion of a secondary battery can, the cap assembly comprising:
a top cap coupled to the upper portion of the can;
a safety vent positioned under the top cap and coupled to a distal end of the top cap; and
a current interrupt device located under the safety vent and having at least a portion that is in contact with the safety vent,
wherein the current interrupt device includes a material having lower hardness than hardness of the safety vent.

2. The cap assembly of claim 1, wherein the safety vent includes aluminum or an aluminum alloy.

3. The cap assembly of claim 2, wherein the safety vent includes 85% by weight to 98% by weight of aluminum, 0% by weight to 7% or less by weight of manganese, 0% by weight to 5% or less by weight of iron, and 0% by weight to 5% or less by weight of silicon.

4. The cap assembly of claim 1, wherein the current interrupt device includes an aluminum material.

5. The cap assembly of claim 4, wherein the current interrupt device includes an aluminum material having purity of 90% or more.

6. The cap assembly of claim 1, wherein the safety vent has hardness of 15 Kgf/mm² to 35 Kgf/mm².

7. The cap assembly of claim 1, wherein the current interrupt device has hardness of 10 Kgf/mm² to 30 Kgf/mm².

8. The cap assembly of claim 1, wherein the safety vent has yield strength of 1 Kgf/mm² to 5 Kgf/mm², and
the current interrupt device has yield strength of 2 Kgf/mm² to 6 Kgf/mm².

9. The cap assembly of claim 1, wherein the safety vent has an elongation rate of 25% to 35%, and
the current interrupt device has an elongation rate of 35% to 45%.

10. The cap assembly of claim 1, wherein the safety vent includes a recessed central portion having a recessed center, an edge portion coupled to a distal end of the top cap, and a venting portion connecting the recessed central portion and the end,
a notch is included between the recessed central portion and the edge portion, and
a lower surface of the venting portion is formed at an angle of 0° to 30° with an upper surface of the edge portion.

11. A secondary battery, comprising:
a battery assembly in which a plurality of electrodes and separation membranes are alternately stacked;
a can having one side open and mounting the battery assembly therein; and
the cap assembly of any one of claims 1 to 10.
